(19) **Europäisches Patentamt European Patent Office Office européen des brevets**

(11) **EP 3 847 638 B1**

(12) **FASCICULE DE BREVET EUROPEEN**

(45) Date de publication et mention de la délivrance du brevet:
**04.06.2025 Bulletin 2025/23**

(21) Numéro de dépôt: **19756326.5**

(22) Date de dépôt: **02.08.2019**

(51) Classification Internationale des Brevets (IPC):
**G09G 5/02** *(2006.01)*

(52) Classification Coopérative des Brevets (CPC):
**G09G 5/02; G09G 3/006;** G09G 3/2003;
G09G 2320/0242; G09G 2320/0666;
G09G 2320/0693; G09G 2340/06; G09G 2360/145

(86) Numéro de dépôt international:
**PCT/EP2019/070904**

(87) Numéro de publication internationale:
**WO 2020/048701 (12.03.2020 Gazette 2020/11)**

(54) **PROCEDE DE MESURE D'UN ESPACE DE COULEUR PROPRE A UN INDIVIDU ET PROCEDE DE CORRECTION D'IMAGES NUMERIQUES EN FONCTION DE L'ESPACE DE COULEUR PROPRE A L'INDIVIDU**

VERFAHREN ZUR MESSUNG EINES FÜR EIN INDIVIDUUM SPEZIFISCHEN FARBRAUMES UND VERFAHREN ZUR KORREKTUR VON DIGITALEN BILDERN ABHÄNGIG VON DEM FÜR DAS INDIVIDUUM SPEZIFISCHEN FARBRAUM

METHOD FOR MEASURING A COLOUR SPACE SPECIFIC TO AN INDIVIDUAL AND METHOD FOR CORRECTING DIGITAL IMAGES DEPENDING ON THE COLOUR SPACE SPECIFIC TO THE INDIVIDUAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.09.2018 FR 1857928**

(43) Date de publication de la demande:
**14.07.2021 Bulletin 2021/28**

(73) Titulaires:
• **Centre national de la recherche scientifique 75016 Paris (FR)**
• **Université Grenoble Alpes 38400 Saint-Martin-d'Hères (FR)**

(72) Inventeurs:
• **ALLEYSSON, David 38430 MOIRANS (FR)**
• **MEARY, David 38000 GRENOBLE (FR)**

(74) Mandataire: **IPAZ Bâtiment Platon Parc Les Algorithmes 91190 Saint-Aubin (FR)**

(56) Documents cités:
**US-A1- 2013 154 903**

• **MICHAEL A WEBSTER ET AL: "Motion Minima for Different Directions in Color Space INTRODUCTION", VISION RES. ELSEVIERSCIENCELTD.AURIGHTSRESERVED, 1 January 1997 (1997-01-01), pages 147 - 1498, XP055579974, Retrieved from the Internet <URL:https://core.ac.uk/download/pdf/82236626.pdf>**
• **CROPPER ET AL: "The detection of motion in chromatic stimuli: first-order and second-order spatial structure", VISION RESEARCH, PERGAMON PRESS, OXFORD, GB, vol. 45, no. 7, 1 March 2005 (2005-03-01), pages 865 - 880, XP027613338, ISSN: 0042-6989, [retrieved on 20050301]**

**(Cont. page suivante)**

- IVAR FARUP: "Hyperbolic geometry for colour metrics", OPTICS EXPRESS, vol. 22, no. 10, 14 May 2014 (2014-05-14), pages 12369, XP055579992, DOI: 10.1364/OE.22.012369

**Description**

## Domaine technique et État de la technique

La présente invention se situe dans le domaine du traitement d'images et notamment dans le domaine du rendu des couleurs par différents moyens d'affichage.

L'invention propose une méthode de mesure d'un espace de couleur propre à un individu ainsi qu'une méthode de correction d'images numériques en fonction de l'espace couleur propre à l'individu.

L'invention cherche à définir un espace métrique de couleur pour un utilisateur face à un dispositif d'affichage.

L'espace de vision des couleurs a longtemps été construit selon un concept d'équivalence visuelle, ou métamérisme, entre les lumières monochromatiques.

Les lumières monochromatiques ont été utilisés dans le domaine de la photométrie pour mesurer la sensibilité globale de l'œil selon les différentes longueurs d'onde de la lumière.

Par ailleurs, il a été mis en évidence que l'œil n'a pas une sensibilité constante sur toutes les longueurs d'ondes de la lumière visible.

En ce qui concerne la vision des couleurs à proprement parler, la détermination d'un espace de couleurs est basée sur une expérience dite « colour matching experiment » décrite notamment par Siles, W.S. & Bruch J. M. dans l'article suivant : « NPL colour-matching investigation : final report ». Ainsi il a été déterminé un espace de vision de couleurs défini par une base de vecteurs RVB selon les longueurs d'ondes des trois couleurs primaires soit rouge, vert et bleu. Les vecteurs selon les couleurs primaires ont été linéairement transformés en fonctions spectrales XYZ positives. Les fonctions spectrales XYZ ont été normalisées par la Commission Internationale de l'Éclairage selon plusieurs normes CIE successives.

Cette paramétrisation par longueur d'onde de l'espace des couleurs présente plusieurs désavantages. Un premier désavantage est que le matériel pour réaliser les mesures est très difficile à calibrer et les expériences très fastidieuses à mener. Un autre désavantage est que même si les bases de construction des lumières monochromatiques sont très précises en termes de longueur d'onde, il est très difficile d'en gérer l'intensité. Ceci exclu donc de fait l'aspect non linéaire des fonctions de vision de la couleur selon son intensité.

US 2013/154903 A1 divulgue un appareil de correction des couleurs pour assurer la correspondance ou la cohérence des couleurs entre les dispositifs d'affichage stéréoscopique, doté d'un processeur pour corriger les couleurs du dispositif d'affichage stéréoscopique cible sur la base de données de retour d'un utilisateur placé devant le dispositif d'affichage.

Michael A Webster ET AL: "Motion Minima for Different Directions in Color Space INTRODUCTION" et CROPPER ET AL: "The detection of motion in chromatic stimuli: first-order and second-order spatial structure" sont des études sur le mouvement minimum perçu par un utilisateur soumis à un stimulus lumineux en relation avec la couleur dudit stimulus.

IVAR FARUP: "Hyperbolic geometry for colour metrics" discute l'utilisation de la géométrie hyperbolique pour la construction d'espaces de couleurs.

## Résumé de l'invention

Un objectif de l'invention est notamment de proposer une méthode pour compenser un système d'affichage pour des particularités d'un espace couleur propre à un individu face à un afficheur particulier.

La présente invention propose à cette fin un procédé tel que défini dans la revendication 1.

La présente invention porte également sur un dispositif tel que défini dans la revendication 7.

L'invention concerne également un produit programme d'ordinateur tel que défini dans la revendication 8.

L'invention porte aussi sur un support d'enregistrement lisible tel que défini dans la revendication 9.

## Description des figures

D'autres avantages et caractéristiques de l'invention apparaîtront à l'examen de la description détaillée de plusieurs modes de réalisation nullement limitatifs, et des dessins annexés, sur lesquels :

- La figure 1 représente plusieurs étapes générales de la méthode selon l'invention ;
- La figure 2 représente un dispositif de mise en œuvre de l'invention ;
- La figure 3 représente une mesure d'une radiance émise par un afficheur pour les canaux rouge, vert et bleu pris en isolation ;
- La figure 4 représente un schéma général d'un modèle affine de la lumière produite par un écran ;
- La figure 5 représente une application du modèle affine de la lumière produite par l'écran dans l'espace CIE-xy ;

- La figure 6 représente les relations entre un espace orthogonal ABC, l'espace affine des lumières et l'espace des gains de l'écran ;
- La figure 7a représente des composantes ABC obtenues par une première méthode de décorrélation ;
- La figure 7b représente des composantes ABC obtenues par projection canonique ;
- La figure 7c représente des composantes ABC obtenues par la méthode de Gram-Schmidt ;
- La figure 7d représente des composantes ABC obtenues par une méthode de décomposition en valeurs singulières d'application linéaire ;
- La figure 8a représente, dans l'espace de ABC, les composantes *RGBI* selon la méthode de décorrélation ;
- La figure 8b représente, dans l'espace de ABC, les composantes *RGBI* selon la méthode de projection canonique ;
- La figure 8c représente, dans l'espace de ABC, les composantes *RGBI* selon la méthode de Gram-Schmidt ;
- La figure 8d représente, dans l'espace de ABC, les composantes *RGBI* selon la méthode de décomposition en valeurs singulières d'application linéaire ;
- La figure 9a représente dans le repère ABC, le plan P1 dans lequel est construit un stimulus de « minimum motion » ;
- La figure 9b représente l'équation du stimulus de « minimum motion » ;
- La figure 10 représente une construction spatiale du stimulus de « minimum motion » ;
- La figure 11a représente une rotation d'un repère ($p$, $i$, $j$) du plan P1 ;
- La figure 11b représente un plan P2 colinéaire à la direction d'un mouvement minimal perçu dans P1 ;
- La figure 12a représente une procédure d'estimation du seuil de perception d'un mouvement minimal défini par une rotation dans le repère de P1 ;
- La figure 12b représente une procédure d'estimation d'un seuil de perception d'un mouvement minimal en fonction de la rotation ;
- La figure 13a représente un résultat d'une mesure d'un champ de vecteurs de luminance pour un premier observateur, en quinze points de mesures répartis sur une sphère de rayon unité dans le repère ABC ;
- La figure 13b représente un résultat de mesure d'un champ de vecteurs de luminance pour un premier observateur, sur quinze points de mesures répartis sur une sphère de rayon quatre dans le repère ABC ;
- La figure 13c représente des surfaces de luminance constante pour le premier observateur dans le repère ABC ;
- La figure 13d représente des surfaces de luminance constante pour un deuxième observateur dans le repère ABC ;
- La figure 14 représente un exemple de représentation conjointe de l'espace de l'écran et de l'espace de l'observateur dans un espace commun, ABC ;
- La figure 15 représente un schéma de conversion entre un espace de radiance d'une scène, un espace de gain d'une caméra, et un espace de gain d'un afficheur ;
- La figure 16 représente un modèle général de transformation entre l'afficheur et l'observateur.

## Description détaillée

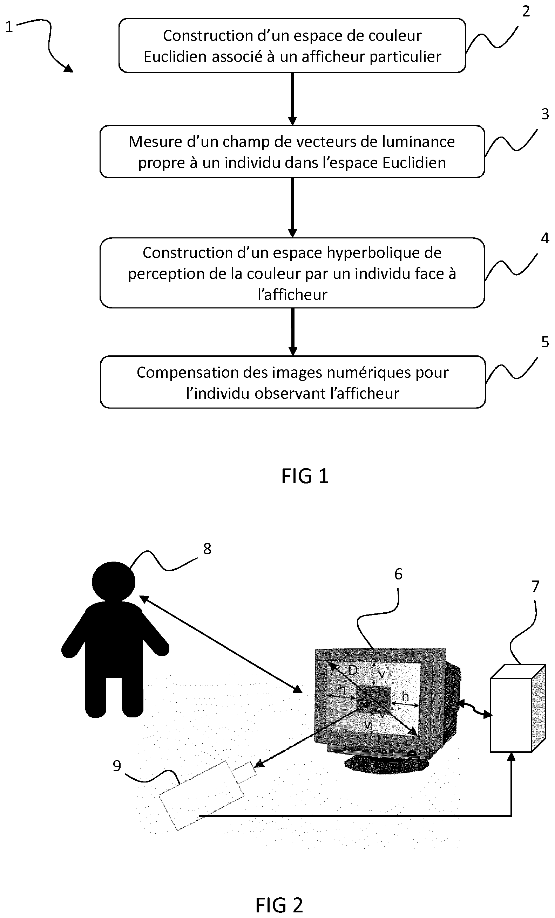

La présente invention traite, à titre d'exemple d'application, d'une méthode 1 pour compenser un système d'affichage adapté à des particularités propres à un espace couleur d'un individu, ou observateur, faisant face à un afficheur particulier. La présente méthode comprend plusieurs étapes principales représentées sur la figure 1. Ces différentes étapes peuvent être appliquées à plusieurs domaines différents.

Une première étape générale 2 peut être une étape de construction d'un espace radiométrique de couleur Euclidien muni d'un produit scalaire, d'une propriété d'orthogonalité, associé à un afficheur, ou dispositif d'affichage particulier, comme un écran d'ordinateur.

Une deuxième étape 3 peut être une étape de mesure du champ de vecteurs de luminance vu par un observateur particulier dans l'espace Euclidien précédemment défini.

Une troisième étape 4 peut être une étape de construction d'un espace hyperbolique, à partir du champ de vecteurs, représentatif de l'espace de vision en couleur de l'observateur faisant face à l'afficheur.

Les première, deuxième et troisième étapes font parties d'un procédé dit de construction d'un espace de couleur propre à un individu visualisant une image couleur sur un dispositif d'affichage.

Une quatrième étape 5 peut être une étape de compensation des images numériques adaptée audit observateur regardant l'afficheur.

La quatrième étape 5 peut être différente selon les modes d'applications particuliers.

La quatrième étape peut faire partie d'un procédé de correction d'images numériques en fonction d'un espace de couleur propre à un individu comprenant également une étape préalable à la quatrième étape 5 : une étape de mise en œuvre du procédé de construction d'un espace de couleur propre à un individu visualisant une image couleur sur un dispositif d'affichage.

Les différentes étapes de la méthode selon l'invention sont décrites plus en détail par la suite.

La présente invention utilise avantageusement une propriété particulière de l'espace des métriques des couleurs d'un observateur humain : à savoir que cet espace métrique est hyperbolique. Les axes et les courbures de

cet espace métrique dépendant d'un observateur particulier face à un dispositif d'affichage particulier.

La figure 2 représente un exemple d'un dispositif de mise en œuvre de la méthode 1 selon l'invention telle que représentée sur la figure 1.

La première étape 2 de construction d'un espace de couleur Euclidien associé à un afficheur 6 peut être mise en œuvre par un ordinateur 7 comprenant notamment au moins une unité de stockage comprenant des instructions de programme aptes à s'exécuter sur au moins un processeur de l'ordinateur 7. Les instructions du programme implémentent les étapes nécessaires à la mise en œuvre de la méthode selon l'invention. La figure 2 représente des caractéristiques techniques du dispositif d'affichage 6 comme la taille D de la diagonale de son écran ainsi que des dimensions h et v de l'écran et de l'image projetée. L'espace de couleur Euclidien est construit à l'aide de mesures de luminances réalisées par un spectrophotomètre 9.

La deuxième étape 3 de mesure du champ d'un vecteur de luminance d'un observateur particulier est mise en œuvre par l'ordinateur 6 disposant d'une interface, non représentée, permettant au programme d'ordinateur d'interagir avec l'observateur 8, notamment en recevant par l'intermédiaire de cette interface les réactions de l'observateur en présence d'un stimulus affiché sur l'écran, ou afficheur 6.

Les troisième et quatrième étapes 4, 5 sont également mises en œuvre par l'ordinateur 7.

La première étape 2 de construction d'un espace de couleur Euclidien associé à l'afficheur est décrite ci-après.

De manière générale, un afficheur 6 produit des lumières qui peuvent être caractérisées par leurs radiances spectrales. Prenons pour illustrer l'exemple d'un afficheur 6 disposant de trois degrés de liberté colorimétrique : rouge, vert et bleu. Une généralisation à un afficheur disposant de plus de composantes de couleurs est également possible par extension.

Pour mesurer la radiance spectrale de l'afficheur 6, il est possible d'utiliser le spectrophotomètre 9. La radiance spectrale de l'afficheur 6 correspond à une valeur numérique dite DV, pour Digital Value en langue anglo-saxonne, appelée aussi valeur digitale. La valeur numérique est une consigne donnée à l'afficheur 6 par une carte vidéo de l'ordinateur 7 afin d'afficher une image sur chaque canal de couleur rouge, vert ou bleu. La carte vidéo pilote l'afficheur 6 par le moyen des consignes en valeur DV.

Dans l'exemple représenté sur la figure 2, l'image à mesurer s'étend sur un tiers de l'écran respectivement en longueur h et en hauteur v. Le fond de l'écran de l'afficheur 9 peut être éclairé par un gris de luminance moyenne correspondant par exemple à une valeur digitale de 0,74 pour les canaux rouge, vert et bleu.

Pour la mise en œuvre de la première étape 2 de construction d'un espace de couleur Euclidien associé à l'afficheur 6, on choisit des valeurs digitales $DVm$ qui couvrent l'ensemble du domaine spectral possible avec un pas régulier sur chacun des canaux de l'afficheur. Les mesures de radiance sont réalisées avec ces valeurs digitales $DVm$.

L'ensemble $DVm$ peut être décrit par un ensemble de $N_{DV}$ valeurs digitales prises entre zéro et un. Pour l'exemple $N_{DV}$ = 18. Ainsi :

$$DVm = \left[0, \frac{1}{N_{DV}-1}, \frac{2}{N_{DV}-1}, \cdots, 1\right]^{T} \quad (1000)$$

Avantageusement, $N_{DV}$ peut prendre toute valeur correspondant à la limite de la résolution couleur de l'afficheur. Par exemple, pour un système 8bits par canaux de couleur il est possible de choisir jusqu'à 256 valeurs différentes. Dans un autre exemple, pour un système 15bits par canaux de couleur, il est possible de choisir jusqu'à $2^{15}$ valeurs différentes.

Des mesures de radiances pour l'ensemble des $DVm$ qui pilotent les canaux rouge, vert et bleu de l'écran sont réalisées à l'aide du spectrophotomètre. Chaque canal rouge, vert, bleu est mesuré en isolation par rapport aux autres canaux et également en combinaison avec un ou deux autres des trois canaux afin de vérifier les performances d'additivité des couleurs de l'afficheur 6.

Si l'on choisit la matrice $DV_{all}$ de l'ensemble des vecteurs des valeurs digitales appliquées sur les différents canaux, de taille (7 $*$ 18 = 126) $\times$ 3, elle peut s'exprimer comme suit :

$$DV_{all} = \begin{bmatrix} 1 & 0 & 0 \\ 0 & 1 & 0 \\ 0 & 0 & 1 \\ 1 & 1 & 0 \\ 1 & 0 & 1 \\ 0 & 1 & 1 \\ 1 & 1 & 1 \end{bmatrix} \otimes DVm \quad (1001)$$

On suppose par exemple que le spectrophotomètre fournit $n\lambda$ = 401 valeurs spectrales pour la radiance, couvrant le domaine spectral de 380nm à 780nm avec un pas de 1nm. On appelle $m(\lambda, DV_{all}^T)$ la matrice de taille 401 $\times$ 126 contenant l'ensemble des radiances spectrales mesurées pour toutes les valeurs digitales.

Dans la suite, un modèle affine des lumières produites par l'afficheur 6 est construit.

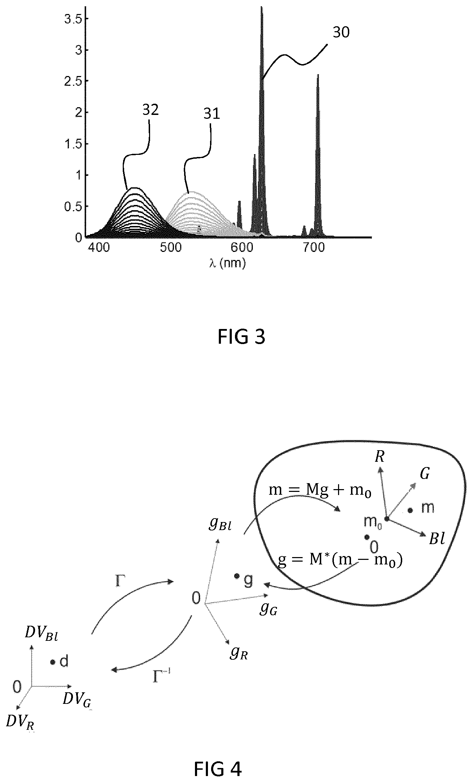

La figure 3 représente un exemple de mesure de radiance sur les canaux rouge 30, vert 31 et bleu 32 en isolation pour dix-huit valeurs de *DV* entre 0 et 1, pour un afficheur de type CRT, acronyme pour Cathode Ray Tube en langage anglo-saxon, ou écran à tube cathodique. Arbitrairement, l'unité énergétique spectrale est 683.02 W/str/m$^2$/nm. La constante 683.02 représente une efficacité lumineuse spectrale maximale en lumen/W dans le domaine photopique. L'utilisation de cette valeur constante particulière permet de faire en sorte que le produit scalaire d'une radiance spectrale *r* ($\lambda$) par *V*($\lambda$), une fonction d'efficacité lumineuse spectrale, donne directement la luminance.

En normalisant ainsi les énergies, le calcul d'une luminance en cd/m$^2$ s'opère comme un produit scalaire entre la radiance spectrale *r*($\lambda$) et la fonction d'efficacité lumineuse spectrale *V*($\lambda$).

Sur la figure 3, l'axe des abscisses représente la longueur d'onde $\lambda$ en nanomètres et l'axe des ordonnées représente la radiance spectrale multiple de 683,02 W/str/m$^2$/nm.

Dans un premier temps, on construit un modèle affine de prédiction des mesures de radiance $m(\lambda; DV^T)$ à partir des valeurs de *DV*. Ensuite on construit un espace Euclidien orthogonal associé à l'afficheur tel que décrit dans la suite.

Le schéma général du modèle affine de la lumière produite par un écran est représenté sur la figure 4. La figure 4 représente donc un modèle affine de production de lumière m par un afficheur en fonction de la valeur digitale d donnée à la carte vidéo. Sur la figure 4 sont représentés trois espaces : l'espace des valeurs digitales *DV* représenté par le repère (0, $DV_R$, $DV_G$, $DV_{Bl}$), l'espace des gains de l'afficheur représenté par le repère (0, $g_R$, $g_G$, $g_{Bl}$) et l'espace des lumières représenté par le repère ($m_0$, *R, G, Bl*).

À partir d'un vecteur de valeurs digitales $d = [d_R, d_G, d_{Bl}]^T$ donné comme consigne à la carte vidéo, on produit un vecteur de gain $g = [g_R, g_G, g_{Bl}]^T$ à travers une fonction vectorielle non linéaire $\Gamma$. Le vecteur de gain exprime un gain compris entre 0 et 1 sur les fonctions prototypes de lumière émises par l'afficheur à travers un modèle affine de matrice *M* et de décalage à l'origine $m_0$.

Tel que représenté sur la figure 4, le modèle affine peut s'écrire :

$$m(\lambda, DV(i)^T) = Mg + m_0 = M\Gamma(DV) + m_0 \quad (1003)$$

En supposant la propriété d'additivité de l'afficheur, il est possible de n'utiliser que les mesures des canaux rouge, vert et bleu en isolation pour prédire l'ensemble des mesures.

Dans la suite, la radiance spectrale correspondant à une valeur mesurée est notée $m(\lambda, DV(i)^T)$. Le décalage à l'origine $m_0$ est estimé comme la moyenne des valeurs mesurées pour $DV(i) = [0,0,0]^T$. En effet, on peut par exemple mesurer sept fois la radiance spectrale pour cette valeur digitale, c'est-à-dire une fois pour chaque couleur rouge, vert, bleu, jaune, magenta, cyan et gris. Ainsi :

$$m_0 = \overline{m(\lambda, [0,0,0]^T)} \quad (1004)$$

Ensuite, il est possible de calculer de deux manières différentes les fonctions prototypes de l'écran.

Une première façon de choisir les fonctions prototypes est d'utiliser les maxima des mesures sur les canaux rouge, vert, bleu :

$$R(\lambda) = m(\lambda, [1,0,0]^T) - m_0$$
$$G(\lambda) = m(\lambda, [0,1,0]^T) - m_0 \quad (1005)$$
$$Bl(\lambda) = m(\lambda, [0,0,1]^T) - m_0$$

Les gains sont alors donnés par :

$$g_R(i) = \left(R(\lambda)^T R(\lambda)\right)^{-1} (m(\lambda, [DV(i), 0,0]^T) - m_0)$$
$$g_G(i) = \left(G(\lambda)^T G(\lambda)\right)^{-1} (m(\lambda, [0, DV(i), 0]^T) - m_0) \quad (1006)$$
$$g_{Bl}(i) = \left(Bl(\lambda)^T Bl(\lambda)\right)^{-1} (m(\lambda, [0,0, DV(i)]^T) - m_0)$$

Une deuxième façon de choisir les fonctions prototypes est d'utiliser une décomposition de rang un. Pour l'exemple le canal choisi est le canal rouge mais la méthode est également applicable pour les canaux vert et bleu.

On réalise donc une décomposition en valeurs s et vecteurs u singuliers de la matrice des mesures pour le canal rouge :

$$m(\lambda, [DV(i), 0, 0]) = usv^T \qquad (1007)$$

$$R'(\lambda) = |u(:,1)|\sqrt{|s(1,1)|} \qquad (1008)$$

$$g'_R(i) = \sqrt{|s(1,1)|}|v(:,1)| \qquad (1009)$$

Cependant, la décomposition de rang 1 ne garantit pas que les gains soient compris entre 0 et 1. Les valeurs sont donc corrigées de la manière suivante :

$$R(\lambda) = R'(\lambda)g'_R(n_{DV}) \qquad (1010)$$

$$g_R(i) = g'_R(i)/g'_R(n_{DV}) \qquad (1011)$$

La matrice M est alors composée des fonctions prototypes suivantes :

$$M = \begin{bmatrix} R(\lambda_1) & G(\lambda_1) & Bl(\lambda_1) \\ \vdots & \vdots & \vdots \\ R(\lambda_{N_\lambda}) & G(\lambda_{N_\lambda}) & Bl(\lambda_{N_\lambda}) \end{bmatrix} \qquad (1012)$$

Les valeurs de gains sont les valeurs exactes pour les lumières mesurées. Cependant, pour être capable de prédire la radiance pour des valeurs quelconques de valeur digitale, il convient d'interpoler les gains entre les valeurs mesurées. À cette fin, on définit la fonction vectorielle suivante :

$$\Gamma : DV \rightarrow g, g = [g_R, g_G, g_{Bl}]^T = \Gamma(DV) = \Gamma([DV_R; DV_G; DV_{Bl}]^T) (1013)$$

Cette fonction $\Gamma$ est une fonction définie en N morceaux de la manière suivante pour chacun des canaux de couleur c :

$$\Gamma^c(DV_c) = \{i = [1, \cdots, N]; \Gamma_i(x) = a_i + b_i x^{\gamma_i}; x_{i-1} \leq x \leq x_i; x_0 = 0; x_N =$$
$$1; a_1 = 0; b_N = 1\} \qquad (1014)$$

Ensuite, on ajoute à cette fonction par morceaux deux conditions : la première condition est que les morceaux contigus se recollent entre eux, la deuxième condition est que les dérivées à droite et à gauche au point de recollement soient égales. Ces deux conditions mènent aux équations suivantes :

$$\begin{cases} \Gamma_{i-1}(x_{i-1}) = \Gamma_i(x_{i-1}) \\ \dfrac{\partial \Gamma_{i-1}}{\partial x}(x_{i-1}) = \dfrac{\partial \Gamma_i}{\partial x}(x_{i-1}) \end{cases} \Longrightarrow a_i, b_i \; constrained \qquad (1015)$$

Les deux conditions permettent de déterminer l'ensemble des paramètres $a_i$ et $b_i$. Il reste ensuite à déterminer les paramètres $x_i$ et $\gamma_i$ pour que la fonction $\Gamma^c$ soit entièrement déterminée. Les paramètres $x_i$ et $\gamma_i$ représentant respectivement les abscisses et les rayons de courbures des points de recollement entre les morceaux de la fonction $\Gamma^c$.

Les paramètres $x_i$ et $\gamma_i$ peuvent être calculés par une optimisation non linéaire aux moindres carrés entre les valeurs DV et les gains mesurés.

On utilise l'ensemble des points mesurés pour les canaux *RGBl* (pour Red, Green, Blue ou Rouge, Vert, Bleu) pour lesquels nous disposons de la valeur *DV(i)* de consigne, et pour lesquels nous pouvons calculer le gain *g* par $g_i = M^{-1}(m - m_0)$. À l'aide des dix-huit couples (*DV(i)*, *g_i*) on utilise une regréssion non-linéaire pour trouver les meilleurs valeurs ($x_i$, $\gamma_i$). Les valeurs limites sont $a_0 = 0$ et $b_N = 1$, $x_0 = 0$, $x_N = 1$. La position des morceaux, ainsi que la courbe exponentielle gamma, qui gouverne la courbure du morceau, sont calculés par régression non linéaire.

Par ailleurs, l'ensemble de ces paramètres est à déterminer pour chacun des canaux rouge, vert et bleu.

La fonction inverse de $\Gamma_i$ est également entièrement définie par ces paramètres $x_i$ et $\gamma_i$ :

$$x = \Gamma_i^{-1}(y) = \left(\frac{y-a_i}{b_i}\right)^{1/\gamma_i} \; ; \; y_{i-1} = \Gamma_{i-1}(x_{i-1}) \le y \le y_i = \Gamma_i(x_i) \quad (1016)$$

La transformation affine inverse $M^*$ est donnée par

$$M^* = (M^T M)^{-1} M^T \quad (1017)$$

selon les modèles proposés par J. Cohen & Kappauf, dans W. E. (1985). Color mixture and fundamental metamers: Theory, algebra, geometry, application. The American journal of psychology, 171-259,

et

$$g = M^*(m - m_0) \quad (1018)$$

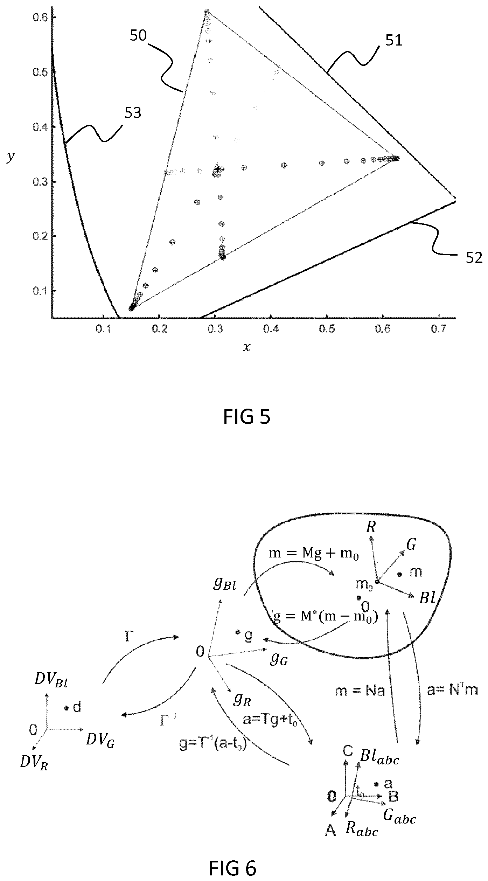

La figure 5 représente une application du modèle affine dans un diagramme chromatique (tronqué) selon le système colorimétrique CIE-xy. Les abscisses et ordonnées sont respectivement les valeurs de x et de y dans le diagramme chromatique. Classiquement la droite 52 est la ligne des couleurs pourpres et les courbes 51 et 53 sont les limites du spectrum locus définissant les limites de la capacité de vision des couleurs par un être humain. Un triangle 50 représente un gamut de l'afficheur, c'est-à-dire un ensemble de couleurs affichables par ledit afficheur. Le triangle peut se transformer en carré ou pentagone si l'on utilise quatre ou plus de couleurs primaires pour générer les lumières. Les croix représentent chaque coordonnée dans l'espace CIE-xy des radiances mesurées. Les cercles représentent les coordonnées xy des radiances spectrales simulées à travers le modèle affine de l'équation (1003) à partir des vecteurs de *DV* correspondant aux points de mesure. La figure 5 met en avant la précision du modèle affine utilisé : on constate en effet une bonne correspondance entre les cercles et les croix. Cette précision est avantageusement due à la qualité de l'approximation de la fonction $\Gamma$ qui est ici définie en cinq morceaux.

Ensuite, on construit un espace orthogonal Euclidien de la manière suivante :

Le modèle affine de production de la lumière par un afficheur n'est pas associé à un espace métrique. Si l'on définit le produit scalaire naturel dans les espaces de Hilbert H, représentant l'espace des lumières, ledit produit scalaire naturel est défini par :

$$\langle f_1(\lambda)|f_2(\lambda)\rangle = \int_{380}^{780} f_1(\lambda)f_2(\lambda)d\lambda = \mathbf{f_1}^T \mathbf{f_2} \qquad (1019)$$

où $f_1(\lambda)$ et $f_2(\lambda)$ sont deux radiances spectrales et $\mathbf{f_1}$ et $\mathbf{f_2}$ sont les vecteurs correspondants aux valeurs échantillonnées ; si l'on applique ce produit scalaire au calcul d'une matrice d'autocorrélation $C_a$ de l'espace vectoriel de l'écran, on obtient :

$$C_a = M^T M = \begin{bmatrix} 81 & 3.7 & 0.99 \\ 3.7 & 29 & 4.3 \\ 0.99 & 4.3 & 29 \end{bmatrix} \ne \begin{bmatrix} 1 & 0 & 0 \\ 0 & 1 & 0 \\ 0 & 0 & 1 \end{bmatrix} \qquad (1020)$$

Cette matrice d'autocorrélation $C_a$ est manifestement différente de l'unité. Cette différence est due à la corrélation entre les canaux rouge, vert et bleu ainsi qu'à la norme des vecteurs de ces canaux qui est différente de un.

Pour rendre l'espace affine de l'afficheur orthogonal, il est possible d'utiliser notamment un des quatre méthodes suivantes :

- une première méthode dite par décorrélation ;
- une deuxième méthode par projection spectrale canonique ;
- une troisième méthode par la méthode de Gram-Schmidt ;
- une quatrième méthode par décomposition en valeurs singulières de l'application linéaire.

D'autres méthodes peuvent bien entendu être utilisées.

La première méthode pour rendre l'espace affine de l'afficheur principal orthogonal est par exemple la méthode par décorrélation.

Une manière de rendre la matrice de corrélation unitaire est d'effectuer le changement de variable suivant :

$$T^{-1} = C_a{}^{-\frac{1}{2}} \; ; \; N = MT^{-1} \qquad (1021)$$

Il est alors aisé de vérifier que $N^T N = Id$ et que $N$ est une matrice contenant des vecteurs orthonormés. La matrice $N$ orthonormée définit un espace orthogonal associé à l'afficheur 6 : c'est un espace Euclidien correspondant à l'afficheur 6 dans lequel la norme et l'orthogonalité sont clairement définis. Nous appellerons ABC les trois vecteurs qui composent la matrice $N$ et qui forment les vecteurs de base de l'espace orthonormé. Puisque la matrice $N$ est orthonormée, la transformation inverse est donnée par $N^{-1} = N^T$.

La figure 6 représente les relations entre l'espace orthogonal ABC, l'espace affine des lumières *RGBI* et l'espace des gains ($g_R$, $g_G$, $g_{Bl}$) de l'afficheur 6 : à partir du modèle affine *RGBI* de la lumière produite par l'afficheur 6 on construit un espace orthonormé ABC associé à l'afficheur 6. On définit la transformation $N$ qui permet le passage de l'espace des lumières *RGBI* à l'espace orthonormé ABC et $T$ la transformation qui permet de passer de l'espace orthonormé ABC à l'espace des gains ($g_R$, $g_G$, $g_{Bl}$) de l'afficheur 6.

On définit alors le vecteur $t_0 = N^T m_0$ qui est le correspondant dans l'espace ABC du décalage $m_0$ dans l'espace affine *RGBI*. La transformation entre l'espace ABC et l'espace des gains est alors définie pour la variable a de l'espace ABC et la variable g dans l'espace des gains par :

$$g = T^{-1}(a - t_0)\,; T = (T^{-1})^{-1} = C_a^{\frac{1}{2}}\,; a = Tg + t_0 \quad (1022)$$

L'intérêt de cette dernière transformation est de pouvoir définir un stimulus dans ABC directement et de pouvoir le générer sur l'écran en le transformant dans l'espace des gains avec les équations (1022) et ensuite dans l'espace des valeurs digitales avec la fonction $\Gamma^{-1}$ définie par les équations (1016).

La deuxième méthode pour rendre l'espace affine de l'afficheur principal orthogonal est la méthode par projection canonique. Cette projection utilise un projecteur dit de Cohen, elle est aussi nommée méthode de décomposition du projecteur spectral.

Cette autre façon de définir l'espace orthonormé associé à l'afficheur consiste à utiliser la matrice R de projection spectrale définie par J. Cohen & Kappauf dans l'article précédemment cité. Cette matrice R de projection spectrale permet de définir un opérateur de projection qui lie l'espace des lumières avec l'espace des gains directement dans l'espace de Hilbert des lumières, muni de son produit scalaire selon l'équation (1019). Cette matrice de projection permet de définir la projection orthogonale qui projette n'importe quelle lumière, définie par sa radiance spectrale, dans le sous-espace vectoriel des lumières affichables par l'écran. Cette projection est définie par la matrice R suivante :

$$R = M(M^T M)^{-1} M^T \qquad (1023)$$

On peut vérifier aisément que cet opérateur spectral $R$ est un projecteur car il est idempotent : $RR = R^2 = R$. Cependant le projecteur $R$ n'est pas sous sa forme canonique. Pour le rendre canonique on décompose le projecteur $R$ à l'aide de la décomposition en valeurs singulières suivante :

$$R = u\,s\,v^T \qquad (1024)$$

On peut vérifier que cette décomposition produit une matrice diagonale s de valeurs singulières qui contient seulement trois valeurs non nulles et égales à un. On peut donc réécrire $R$ de la manière suivante :

$$R = \begin{bmatrix} u_1 & u_2 \end{bmatrix} \begin{bmatrix} s_1 & 0 \\ 0 & 0 \end{bmatrix} \begin{bmatrix} v_1^T \\ v_2^T \end{bmatrix} = u_1 v_1^T = NN^T \quad (1025)$$

La matrice N de projection des lumières dans l'espace orthogonal ABC est donc ici directement calculée à partir des vecteurs singuliers de la matrice de projection. La conversion de l'espace orthogonal ABC vers l'espace des gains est alors donnée par :

$$T = N^T M,\ T^{-1} = (T)^{-1},\ t_0 = N^T m_0 \qquad (1026)$$

La troisième méthode pour rendre l'espace affine de l'afficheur principal orthogonal est la méthode de Gram-Schmidt.

Historiquement, les espaces orthogonaux sont construits à partir d'espaces dont la base n'est pas orthogonale, grâce à la méthode dite de Gram-Schmidt. L'avantage de cette méthode est que l'on peut conserver la direction d'une des composantes de l'espace, la normaliser, et ensuite modifier les autres composantes pour qu'elles soient unitaires et orthogonales à la première. Par exemple, on peut choisir la composante verte comme un premier vecteur et transformer les composantes rouges et bleu pour garantir l'orthogonalité avec le premier vecteur.

Appelons *R, G* et *Bl* les vecteurs des composantes de *M* : *M* = [*R G Bl*].

Ensuite l'opérateur de projection orthogonal sur une droite vectorielle de vecteur directeur u peut être défini selon la méthode de Gram-Schmidt par :

$$proj_u(v) = \frac{\langle u,v \rangle}{\langle u,u \rangle} u \qquad (1027)$$

La transformation de l'espace affine des lumières *RGBl* vers l'espace orthonormé ABC est alors donnée par les relations suivantes si B devient G normalisé :

$$
\begin{aligned}
G' &= G & B &= \frac{G\prime}{\|G\prime\|} \\
R' &= R - proj_{G'}(R) & A &= \frac{R\prime}{\|R\prime\|} \qquad (1028) \\
B' &= Bl - proj_{G'}(Bl) - proj_{R'}(Bl) & C &= \frac{Bl\prime}{\|Bl\prime\|}
\end{aligned}
$$

On construit alors la matrice *N* = [*A B C*] et on en déduit la transformation T de l'espace orthonormé ABC vers l'espace des gains tel que dans l'équation (1026).

La quatrième méthode pour rendre l'espace affine de l'afficheur principal orthogonal est la méthode par décomposition en valeurs singulières de l'application linéaire.

La matrice *M* peut être vue comme une application linéaire entre l'espace des lumières *RGBl* et l'espace des gains. On peut déterminer directement une application orthogonale et unitaire à partir de *M* à l'aide d'une décomposition en valeurs singulières. Comme la matrice est de rang trois, il n'y a que trois valeurs singulières et il est possible de simplifier la décomposition :

$$M = u \, s \, v^T = \begin{bmatrix} u_1 & u_2 \end{bmatrix} \begin{bmatrix} s_1 & 0 \\ 0 & 0 \end{bmatrix} \begin{bmatrix} v_1^T \\ v_2^T \end{bmatrix} \qquad (1029)$$

La matrice *N* est lors directement donnée par *N* = $u_1$. La transformation entre l'espace orthonormé ABC et l'espace des gains est ensuite également donnée par l'équation (1026).

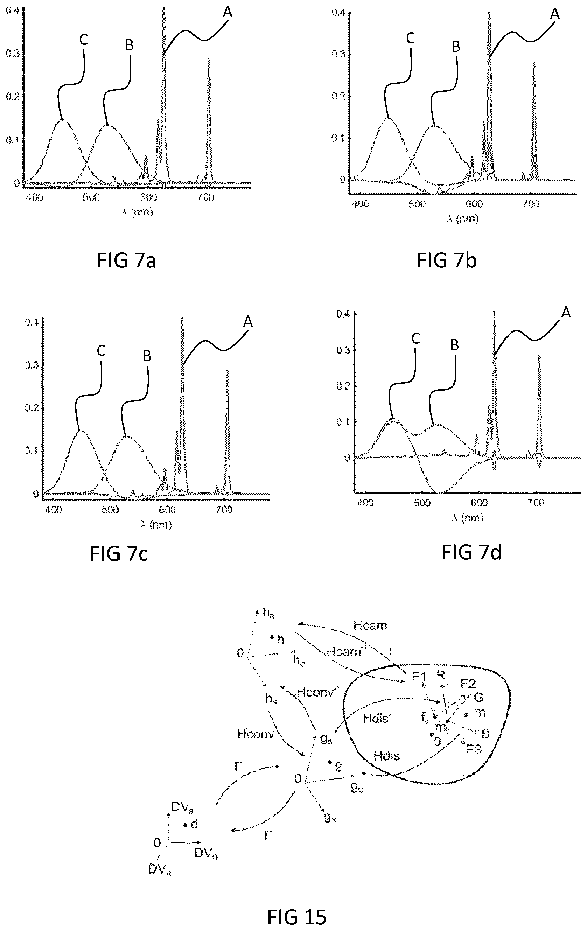

Les figures 7a, 7b, 7c, 7d représentent les composantes A, B, C obtenues à partir de chacune des méthodes pour rendre l'espace affine de l'afficheur principal orthogonal précédemment décrites. Les figures 7a, 7b, 7c, 7d représentent des radiances spectrales en tant que multiples de 683,02 W/str/m$^2$/nm, en fonction des longueurs d'onde λ en nm.

La figure 7a représente les composantes ABC obtenues par la première méthode de décorrélation.

La figure 7b représente les composantes ABC obtenues par projection canonique ou projecteur de Cohen.

La figure 7c représente les composantes ABC obtenues par la deuxième méthode de Gram-Schmidt.

La figure 7d représente les composantes ABC obtenues par la méthode par décomposition en valeurs singulières de l'application linéaire.

Les méthodes présentées ne forment pas une description exhaustive de toutes les méthodes possibles pour convertir un espace supporté par une famille libre, en espace orthonormé. On peut citer par exemple les méthodes de séparation de sources comme autres méthodes.

Toutes ces méthodes sont équivalentes à une rotation près. En effet, il peut être vérifié que chacune des fonctions ABC peut être obtenue à partir de la décomposition donnée par la décorrélation, en appliquant une rotation tridimensionnelle.

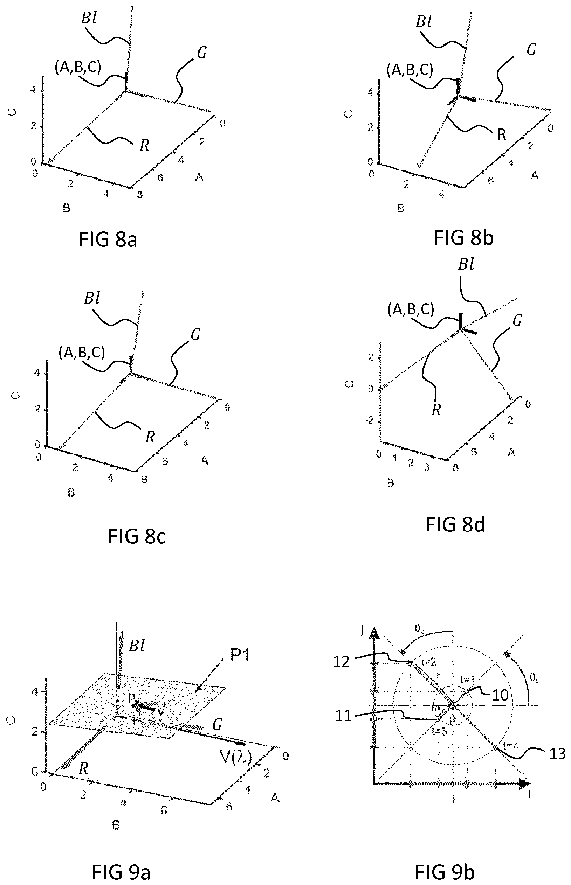

Il est possible de représenter l'espace tridimensionnel ABC associé, et de représenter les vecteurs R, G, Bl contenus dans la matrice *M* et décalés de $m_0$ qui définissent l'espace affichable par l'afficheur, tel que représenté sur les figures 8a, 8b, 8c, 8d. Les coordonnées des composantes *R, G, Bl* dans l'espace *RGBl* sont données par les trois vecteurs colonnes qui composent la matrice *T*. Les figures 8a, 8b, 8c, 8d présentent les vecteurs *R, G, Bl* sur une représentation tridimensionnelle dans l'espace ABC engendré selon chacune des méthodes pour rendre l'espace affine de l'afficheur orthogonal.

La figure 8a représente dans l'espace ABC les composantes *R, G, Bl* selon la méthode de décorrélation.

La figure 8b représente dans l'espace ABC les composantes *R, G, Bl* selon la méthode de projection canonique ou projecteur de Cohen.

La figure 8c représente dans l'espace ABC les composantes *R, G, Bl* selon la méthode de Gram-Schmidt. Cette méthode permet avantageusement d'éviter des erreurs sur les transformations et évite de les confondre avec leurs transposées.

La figure 8d représente dans l'espace ABC les composantes *R, G, Bl* selon la méthode de décomposition en valeurs singulières de l'application linéaire.

La méthode de Gram-Schmidt peut par exemple être utilisée dans le cadre de l'invention. Avantageusement, la méthode de Gram-Schmidt permet de vérifier le bien-fondé des transformations et évite des erreurs dans les transformations transposées. En effet, si la transformation est correctement réalisée, alors le vecteur *G* est colinéaire à l'axe B du repère ABC.

La deuxième étape 3 est l'étape de mesure du champ d'un vecteur de luminance vu par un observateur particulier dans l'espace Euclidien précédemment défini.

Pour mesurer la direction de luminance relative à un observateur, on utilise l'espace ABC orthonormé généré au cours de la première étape 2 précédente.

Autour d'un point dans l'espace couleur ABC, la luminance est définie comme la direction issue de ce point pour laquelle l'intensité lumineuse change sans changer la teinte ou la saturation de la couleur du point vu par l'observateur.

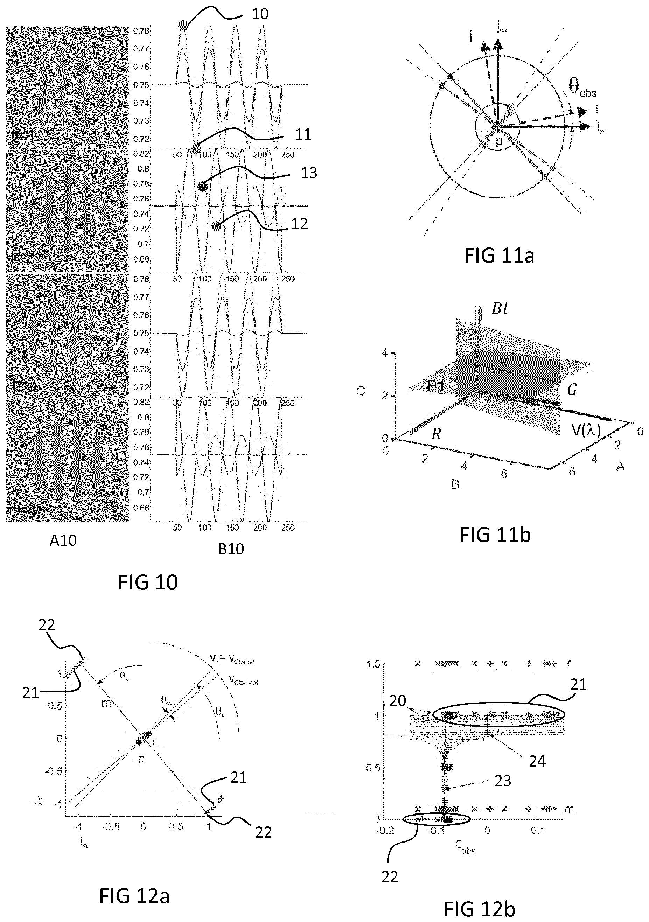

Pour cette deuxième étape 3, l'expérience dite du « minimum motion photometry » est mise en œuvre afin de mesurer la direction de luminance relative à l'observateur autour d'un point. Le principe de l'expérience du « minimum motion photometry » est en partie décrit par Anstis, S. M., & Cavanagh dans « A minimum motion technique for judging equiluminance. Colour vision: Physiology and psychophysics, 155-166 » avec un espace de représentation du stimulus indéfini. L'expérience du « minimum motion photometry » selon l'invention consiste à présenter à l'observateur un stimulus tel que représenté sur les figures 9b et 10 dans un espace couleur Euclidien orthogonal ABC. Le stimulus du « minimum motion photometry » permet de comparer une luminance relative entre deux points en couleurs. Si l'un des points est plus lumineux qu'un autre, un mouvement du stimulus sera observé par l'individu ou observateur. Si le rapport de luminance est inversé alors la direction du mouvement perçu sera également inversée. On peut alors chercher quels points tests ont la même luminance qu'un point donné de référence. L'ensemble de ces points forment une surface d'équiluminance autour du point de référence. On peut considérer la surface d'équiluminance comme un plan, si les points de tests sont proches du point de référence. La direction de luminance est donc un vecteur orthogonal à ce plan d'équiluminance issu du point de référence.

Si l'on considère un point *p* dans l'espace ABC et le vecteur de luminance *V(λ)* défini selon la norme CIE-2006 dans l'espace ABC, alors les coordonnées du vecteur de luminance *V(λ)* sont données par :

$$V_{abc} = N^T V(\lambda) \qquad (1039)$$

Appelons *v* le vecteur normalisé à un de $V_{abc}$ alors $v = V_{abc}/\|V_{abc}\|$. Ensuite, on construit un plan P1 passant par le point *p* et dont un des vecteurs directeur est *v*. Ce plan est utilisé pour définir le stimulus du « minimum motion ». Pour ce faire, on définit également un repère (*p, i, j*) dans le plan P1.

Soit P1 le plan qui passe par le point p, de vecteurs directeurs *v* et [100] dans l'espace ABC. Le vecteur normal n au plan P1 est défini par :

$$n = v \wedge [1\ 0\ 0]^T ; \ n = n/\|n\| \qquad (1040)$$

On peut ensuite définir deux vecteurs *i* et *j* unitaires qui sont orthogonaux et dont la somme est égale à *v*. Ces vecteurs sont obtenus en faisant tourner le vecteur *v* autour de l'axe porté par le vecteur normal n au plan P1 d'un angle de plus ou moins *π*/4. Une rotation d'angle *α* autour du vecteur *n* est donnée par :

$$Rot_n(\alpha) = \begin{bmatrix} (1-c)n_1^2 + c & (1-c)n_1 n_2 - n_3 s & (1-c)n_1 n_3 + n_2 s \\ (1-c)n_1 n_2 + n_3 s & (1-c)n_2^2 & (1-c)n_2 n_3 - n_1 s \\ (1-c)n_1 n_3 - n_2 s & (1-c)n_3 n_2 + n_1 s & (1-c)n_3^2 \end{bmatrix} \quad (1041)$$

avec : c = cos(*α*) ; s = sin(*α*) ; *n* = [$n_1$ $n_2$ $n_3$]$^T$.
On obtient donc :

$$i = Rot_n(-\pi/4)v \text{ et } j = Rot_n(\pi/4)v \quad (1042)$$

La figure 9a représente dans le repère ABC, le plan P1 de vecteurs directeurs $v$ et [100], le repère $(p, i, j)$ tel que $i + j$ = $v$, ainsi que les composantes $R, G, Bl$ et le vecteur de luminance $V(\lambda)$.

Dans le plan P1 muni du repère $(p, i, j)$, on définit le stimulus du « minimum motion » par :

$$S(x,t) =$$
$$j(m \sin\theta_L \sin 2\pi f_x x \sin 2\pi f_t t - dr \cos\theta_C \cos 2\pi f_x x \cos 2\pi f_t t) \quad (1043)$$
$$+i(m \cos\theta_L \sin 2\pi f_x x \sin 2\pi f_t t + dr \sin\theta_C \cos 2\pi f_x x \cos 2\pi f_t t)$$

Les paramètres du stimulus sont représentés sur la figure 9b dans le repère $(p, i, j)$. Un stimulus est une succession de trames de couleurs affichées sur un écran. Pour l'exemple représenté sur la figure 9b, on utilise un stimulus à quatre trames. Les longueurs m et r représentent des contrastes des trames $t = 1$ avec $t = 3$ et $t = 2$ avec $t = 4$. On fixe $\theta_L =$ $\theta_C = \pi/4$ de manière à ce que les couleurs dans les trames soient orthogonales. Il est aussi possible de modifier ces angles pour mesurer le « minimum motion » au lieu de faire tourner le repère $(p, i, j)$. Cependant cette dernière méthode donne des résultats moins satisfaisants.

$x = 1..X$ et $t = 1..T$ définissent une étendue spatiale et temporelle des trames, avec $X$ un nombre total de points spatiaux du stimulus et $T$ un nombre total de trames. $f_x = 1/(Xn_{bars})$ définit une fréquence spatiale du stimulus et $f_t = 1/T$ une fréquence temporelle du stimulus. On peut utiliser par exemple $n_{bars} = 4$ et $T = 4$, ce qui signifie que le stimulus possède quatre périodes spatiales et quatre périodes temporelles. Il est également possible d'étudier la modification du champ de vecteurs avec la fréquence spatiale ou temporelle.

Le paramètre $d = \{-1,1\}$ permet d'inverser la direction du mouvement perçu, toutes les autres valeurs des paramètres de l'équation (1043) étant égales par ailleurs. En effet, ce paramètre peut être vu comme une inversion des trames $t = 1$ et $t = 3$ dans la séquence des trames. On utilise le paramètre $d$ pour éviter que l'observateur puisse utiliser l'apparence des couleurs dans les trames pour en déduire le mouvement. Ce paramètre d est choisi de manière aléatoirement au cours des présentations du stimulus à l'observateur afin de changer aléatoirement la direction du mouvement perçu. Le paramètre d ainsi choisi empêche donc bien l'observateur d'utiliser l'apparence de l'image pour déterminer le mouvement perçu.

Par exemple, le paramètre d permet avantageusement d'éviter qu'un stimulus verdâtre n'entraine une perception du mouvement toujours vers la gauche alors qu'un stimulus rougeâtre entraine une perception du mouvement toujours vers la droite.

Le stimulus est spatialement construit tel que représenté sur la figure 10. Le principe du stimulus est de déphaser les trames de manière à ce que les trames $t = 1$ et $t = 3$ ainsi que $t = 2$ et $t = 4$ soient respectivement en opposition de phase. Les trames successives $(t = 1 ; t = 2)$, $(t = 2 ; t = 3)$, $(t = 3 ; t = 4)$ et $(t = 4 ; t = 1)$ sont quant à elles décalées d'un quart de cycle.

Les diagrammes de la colonne droite B10 de la figure 10 représentent le profil spatial des valeurs digitales DV : rouge, DV/R ; vert, DV/G et bleu, DV/Bl pour les différentes trames. Pour les trames $t = 1$ et $t = 3$, les couleurs $RGBl$ sont en phase alors que pour les trames $t = 2$ et $t = 4$ elles sont en oppositions de phase. Les points jaune clair 10, jaune foncé 11, rouge 12 et vert 13 représentent les valeurs digitales DV des points correspondant dans l'espace ABC de la figure 9a.

Les images de gauche de la colonne A10 de la figure 10 représentent les images affichées pour chaque trame.

Le stimulus est composé d'une séquence temporelle de quatre trames de modulations spatiales sinusoïdales telles que représentées sur la figure 10. Cette séquence produit un mouvement vers la droite, respectivement vers la gauche, si le point pour $t = 2$ apparaît plus lumineux pour l'observateur que le point pour $t = 4$ ou respectivement moins lumineux. Les points à $t = 1$ et $t = 3$ sont des trames qui induisent le mouvement, elles sont composées de la somme vectorielle de $i$ et $j$, ajoutée ou retranchée au point p.

Pour $d = 1$ le principe de la mesure est que si la sensation lumineuse du vert pour un observateur est supérieure à la sensation lumineuse du rouge, il apparaît à l'observateur un mouvement vers la gauche, car le vert de la trame $t = 2$ va suivre le jaune plus lumineux de la trame $t = 3$ et suivre le vert de la trame $t = 4$, etc. L'observateur a ainsi une sensation de mouvement vers la gauche. Si le rouge est plus lumineux que le vert pour l'observateur alors le mouvement est perçu vers la droite. Pour $d = -1$ les mouvements sont inversés.

On détermine le mouvement minimum en faisant tourner le repère à partir d'une position initiale $(p, i_{ini}, j_{ini})$ vers une position $(p, i_{obs}, j_{obs})$ pour laquelle le mouvement du stimulus est minimal pour l'observateur. L'angle de la rotation du repère est donné par $\theta_{obs}$ comme représenté sur la figure 11a.

Dans le plan P1, on utilise une procédure adaptative pour estimer le seuil $\theta_{obs}$ telle que représentée sur les figures 12a et 12b. La procédure adaptative fonctionne de la manière suivante. On choisit des valeurs aléatoires de $\theta_{obs}$ dans un intervalle [-0.2; 0.2], ce qui permet de définir le repère $(p, i, j)$ à partir du repère $(p, i_{ini}, j_{ini})$ tel que représenté sur la figure 11a. Le stimulus est ensuite affiché dans le nouveau repère $(p, i, j)$ et on demande à l'observateur de donner la direction du mouvement qu'il perçoit. Suivant la valeur d'un paramètre $d \in \{-1, +1\}$ et de la direction du mouvement perçu les réponses de l'observateur sont affichées soit en rouge 21 à l'ordonnée 1 de la figure 12b, soit en vert 22 à l'ordonnée 0 sur la figure 12b. Au bout de dix essais 20 on réalise une estimation non linéaire au moindre carré qui donne une fonction psychométrique 23 :

$$f(\theta) = 1 / \left( 1 + e^{-\frac{(\theta - \theta_{obs})}{\sigma}} \right) \quad (1044)$$

La fonction psychométrique 23 est utilisée pour optimiser les tirages des essais suivants 20 dans l'objectif d'estimer le plus rapidement possible un seuil 24 de mouvement minimal. Dans le cas représenté, trente essais sont suffisants pour une bonne estimation du seuil.

Sur la figure 12a, $v_n = v_{Obs}$ init$= v$ le vecteur normalisé à un de $V_{abc}$ ; $v_{Obs}$ final vaut $i + j$ au seuil de mouvement minimal.

Une fois que l'on a estimé la direction du mouvement minimal dans le plan P1, on construit un plan P2, tel que représenté sur la figure 11b, colinéaire à la direction du mouvement minimal dans P1 et colinéaire au vecteur [0 0 1]. Dans le plan P2 on utilise le même protocole pour déterminer la direction du mouvement minimal. Dans le plan P2, les couleurs du stimulus seront bleues et jaunes au lieu de rouges et vertes.

Lorsque l'on a réalisé la mesure du mouvement minimal perçu dans P1 et dans P2, on peut reconstruire un vecteur de luminance $V$ tridimensionnel issu du point $p$ pour un observateur donné.

L'étape suivante de la méthode selon l'invention est la troisième étape 4 de construction d'un espace hyperbolique représentatif de l'espace de vision en couleur de l'observateur faisant face à l'afficheur.

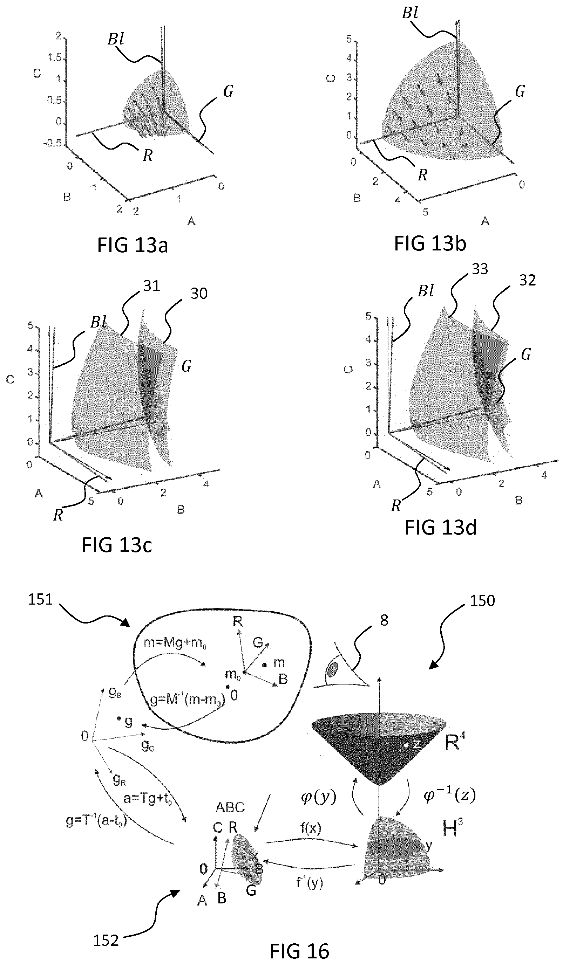

On peut par exemple utiliser la procédure précédente pour associer une luminance $V$, vue par un observateur, à plusieurs points $p$ de l'afficheur dans l'espace ABC. Pour cela, on pourra choisir plusieurs points dans l'espace ABC. Ces points peuvent être choisis sur une sphère de rayon k. Par exemple, on peut choisir N' points répartis uniformément sur la surface de la sphère de rayon $k$. Appelons $P_k$ la matrice de ces points. A chacun de ces points on associe une mesure de la direction de luminance. Appelons $V_k$ la matrice contenant l'ensemble des vecteurs de direction de luminance. Les matrices $P_k$ et $V_k$ sont alors de taille 3xN' pour un rayon de mesure k de la sphère. On peut multiplier les mesures pour plusieurs rayons de sphères, par exemple, de $K$ différents rayons. Les figures 13a, 13b, représentent un ensemble de ces mesures pour N' = 15 points sur une sphère de rayon un et quatre dans ABC. Sur les figures 13a, 13b, les points représentent les coordonnées des points $p$ et les flèches, les directions de $V$. La figure 13b montre les mesures pour N' = 15 points sur la sphère de rayon quatre. On peut observer clairement que les vecteurs partant des points $p$ et de direction $V$ forment un champ de vecteurs convexes puisque les flèches semblent pointer vers une même direction sur les figures 13a et 13b.

Le champ de vecteurs convexes peut être modélisé par une équation du type :

$$V_k(x) = A_k x + x_{0k} \quad (1045)$$

avec :

$$A_k = V_1 P_1 (P_1 P_1^T)^{-1}$$

$$x_{0k} = \overline{V} - A_k \overline{P}$$

où ici $x$ est une coordonnée d'un point dans l'espace ABC et $x_0$ une coordonnée de l'origine du champ de vecteurs de luminance $V_k(x)$. $V_1 = V_k - \overline{V}$ et $P_1 = P_k - \overline{P}$ où $\overline{P} = E_k\{P_k\}$, $\overline{V} = E_k\{V_k\}$ sont les moyennes des matrices $V_k$ et $P_k$ le long de N' points, $E_k$ représentant l'espérance. La matrice $A_k$ et le vecteur $x_{0k}$ sont des paramètres du champ de vecteurs pour un ensemble de mesures sur une sphère de rayon $k$ dans ABC. En choisissant d'autres points de mesures, on obtient des paramètres différents : même si ces autres points produisent un autre champ de vecteurs, ce dernier est cependant proche du premier champ de vecteurs tel que représenté sur la figure 13a. De même, si l'on regarde l'évolution des paramètres avec le rayon de la sphère, leur évolution est faible. Il peut être intéressant de suivre la nature propre de la vision de l'observateur en fonction des niveaux de lumière tout en gardant un paramètre k fixé pour reproduire, avec un modèle affine du champ de vecteurs $V_k$ ou modèle de l'observateur : un ensemble de mesures pour plusieurs rayons de sphère différents. Il est possible d'inclure dans le modèle affine du champ de vecteurs $V_k$ des variations du modèle selon les fréquences spatiales $f_x$ et temporelles du stimulus $f_t$, l'excentricité $e$ du stimulus sur la rétine, l'afficheur $E$, l'observateur $O$. Ainsi les paramètres du champ de vecteurs de luminance mesuré $V_k$, pour l'observateur regardant l'afficheur, avec un stimulus d'excentricité, de fréquences spatiales et temporelles peuvent s'écrivent : $A_\mu$ et $x_{0\mu}$, avec $\mu = (k, f_x, f_t, e, E, O)$ l'ensemble des paramètres. Le paramètre de l'afficheur E est un jeu de primaire Euclidienne ABC de l'afficheur, un jeu de primaire Euclidienne ABC regroupe les fonctions spectrales ABC qui caractérisent un écran particulier. Pour un observateur donné sur un afficheur donné, à partir des points de mesure réalisés en faisant varier tous les autres paramètres, il est possible de prédire, par interpolation, le champ de vecteurs pour toute valeur à l'intérieur de ces paramètres. Autrement dit, si l'on fixe le stimulus par exemple en fréquence spatiale, temporelle, étendue du stimulus, on obtient un premier champ de vecteurs. Mais si l'on change ces paramètres, on obtient un deuxième champ de vecteurs qui peut différer du premier champ de vecteurs. Il est donc possible de paramétrer le champ de vecteurs en fonction des conditions de mesures et d'interpoler le champ de vecteurs entre ces mesures.

Dans toute la suite, et sauf mention contraire, l'observateur, l'afficheur, l'excentricité et les fréquences sont données. Seul le rayon de la sphère de mesure est variable.

Il est possible de calculer une surface de luminance constante à partir du champ de vecteurs. Cette surface est donnée par

$$x^T . V_k(x) = x^T A_k x + x^T x_0 = k \qquad (1046)$$

où le produit scalaire est donné par le produit scalaire Euclidien dans l'espace ABC de l'afficheur *E*. Pour l'exemple la figure 13c représente des surfaces de luminance constante 30, 31 correspondant respectivement à $k = 1$ et $k = 4$, pour un premier observateur dans le repère ABC et la figure 13d représente des surfaces de luminance constante 32, 33 pour $k = 1$ et $k = 4$ pour un deuxième observateur dans le repère ABC.

Les mesures montrent que les champs de vecteurs sont identiques quel que soit le rayon de la sphère sur laquelle sont placés les points autour desquels le champ de vecteurs est mesuré. C'est-à-dire que $A_k$ peut s'écrire $A_k = A/k$. Il s'ensuit que la relation (1046) devient :

$$x^T A x + k x^T x_0 = k^2 \quad (1047)$$

Que l'on peut également écrire :

$$z^T \boldsymbol{J} z = k^2 \qquad (1048)$$

Avec :

$$\boldsymbol{J} = \begin{bmatrix} -1 & 0 & 0 \\ 0 & -1 & 0 \\ 0 & 0 & 1 \end{bmatrix} \quad (1049)$$

$$z = T^{-1}(x + t0) = \frac{1}{\rho}\sqrt{|S|}U^T\left(x + \frac{k}{2}A^{-1}x0\right), \; T^{-1} = \frac{1}{\rho}\sqrt{|S|}U^T, \; t0 = \frac{k}{2}A^{-1}x0$$

$$(1050)$$

$$A = U\sqrt{|S|}\,\boldsymbol{J}\sqrt{|S|}U^T \text{ et } \rho^2 = 1 + \frac{1}{4}x0^T A^{-1}x0 \qquad (1051)$$

Où *U* et *S* sont respectivement la matrice des vecteurs et des valeurs propres de *A*.

La transformation inverse est donnée par :

$$x = Tz - t0 = \rho U\left(\sqrt{|S|}\right)^{-1} x - \frac{k}{2}A^{-1}x0 \qquad (1052)$$

Les paramètres du champ de vecteurs permettent de définir complètement la transformation de l'espace ABC de variable *x* à un espace hyperbolique de variable *z*, composée d'hyperboloïdes en deux dimensions empilées infiniment les unes sur les autres.

Ainsi, si l'on définit l'hyperboloïde dans l'espace hyperbolique de variable *z* par l'équation :

$$z^T \boldsymbol{J} z = 1, \text{ soit } z = \begin{bmatrix} \sinh(t)\cos(\theta) \\ \sinh(t)\sin(\theta) \\ \cosh(t) \end{bmatrix} \qquad (1053)$$

On peut représenter cet hyperboloïde dans l'espace de $x$ par la relation (1052). Ainsi $x$ représente les coordonnées dans l'espace ABC de l'hyperboloïde définie dans l'espace de z.

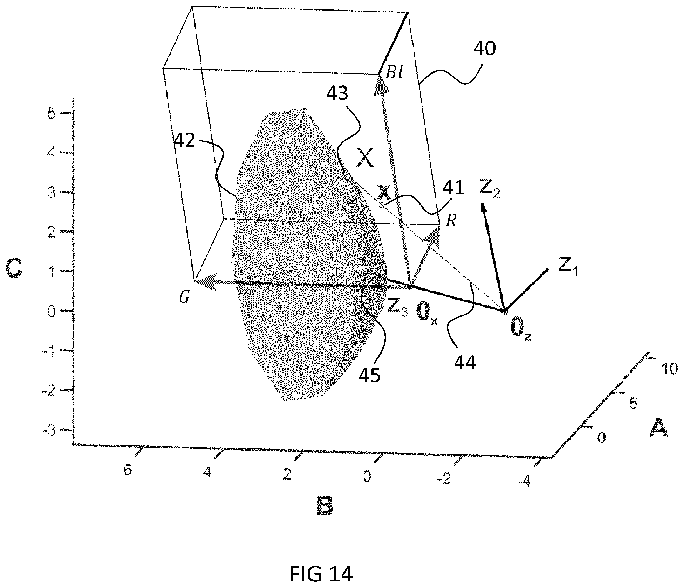

La Figure 14 présente un exemple de représentation conjointe de l'espace de l'écran et de l'espace de l'observateur dans un espace commun, ABC. L'écran est matérialisé par un cube 40 de couleurs que l'écran peut produire avec des phosphores matérialisés par les vecteurs R, G et B et l'origine $O_x$. L'observateur est matérialisé par l'hyperbole 42 de centre 45 et d'axes $z_1$, $z_2$, $z_3$, dans le repère de centre $0_z$.

En prenant l'équation (1048) et en remplaçant $z$ par son expression (1050) en fonction de $x$, on peut obtenir une représentation des hyperboloïdes de rayon k dans l'espace ABC.

$$z^T \boldsymbol{J} z = k^2, \; z = T^{-1}(x + t0)$$

$$(x + t0)^T (T^{-1})^T \boldsymbol{J} T^{-1}(x + t0) = k^2 \quad (1054)$$

Si l'on pose,

$$X = x/k, \; X0 = t0/k \text{ et } R = (T^{-1})^T \boldsymbol{J} T^{-1} \quad (1055)$$

on a :

$$(X + X0)^T R(X + X0) = 1 \qquad (1056)$$

Cette équation représente pour $X + X0$ dans le repère ABC, l'hyperboloïde de rayon $k = 1$ suivant la métrique $\boldsymbol{R}$.

C'est-à-dire que pour $X = x/k$, la métrique est totalement représentée par une hyperboloïde de rayon $k = 1$ et la métrique produite par $\boldsymbol{R}$ et $X0$ dans ABC. Réciproquement il suffit de projeter $x$ sur l'hyperboloïde de rayon $k = 1$ suivant $x = kX$, pour obtenir le point $X$ correspondant à $x$ et la valeur de $k$.

La Figure 14 représente une projection d'un premier point 41 de l'espace ABC sur un hyperboloïde 42 de rayon un en un deuxième point 43 suivant la direction $X = x/k$ représentées par une droite 44.

Il est donc possible de transformer n'importe quel point de l'espace ABC dans l'espace de l'hyperboloïde de rayon 1. Il faut d'abord projeter le point $x$ sur l'hyperboloïde de rayon 1 pour obtenir $X$. Ensuite $X$ suit une métrique donnée par l'équation (1056).

Autrement dit, on peut associer à l'espace ABC, la métrique de l'observateur qui est une métrique hyperbolique dans l'espace z et qui s'exprime par $\boldsymbol{R}$ et $X0$ dans l'espace ABC. On peut ainsi connaitre la position, de tous les points de l'écran dans l'espace hyperbolique de l'observateur.

Chaque point $x = [x_a, x_b, x_c]^T$ de l'espace de l'écran ABC peut donc être transformé en coordonnées liées à la métrique de l'observateur suivant les paramètres $(k, t, \theta)$.

$$z = \begin{bmatrix} k \sinh(t)\cos(\theta) \\ k \sinh(t)\sin(\theta) \\ k \cosh(t) \end{bmatrix} \quad (1057)$$

Avec

$$k = \sqrt{(x + X0)^T R(x + X0)}, \quad (1058)$$

$$Z = \frac{z}{k} = T^{-1}\left(\frac{x}{k} + X0\right) = \begin{bmatrix} z_1 \\ z_2 \\ z_3 \end{bmatrix}, \qquad (1059)$$

$$t = \operatorname{arccosh}\left(\frac{z_3}{k}\right), \; \theta = \arctan\left(\frac{z_2}{z_1}\right). \qquad (1060)$$

Une correction d'une image pour un observateur peut par exemple, consister à modifier les valeurs de *k*. Par exemple, si l'on force *k* = 1 pour l'ensemble des points d'une image, alors l'observateur aura tout le loisir de contempler les couleurs de l'image mais l'ensemble de son système visuel sera en mode d'adaptation constant ce qui devrait réduire la fatigue visuelle.

En résumé, la conversion d'une image numérique pour qu'elle corresponde à un observateur particulier est donc donnée par l'ensemble des opérations suivantes :

- La construction d'un espace hyperbolique de l'observateur dans l'espace ABC de l'écran. Cet espace étant donné par T et *t*0 selon l'équation (1050).
- La conversion des points *x* de l'image dans l'espace ABC en points z, ladite conversion étant paramétrée par $(k, t, \theta)$ suivant les équations (1058),(1059),(1060).
- La modification du paramètre k, soit en le fixant à une constante par exemple pour une adaptation à un niveau de luminance constant de l'observateur, ou en réduisant sa variance, par exemple pour une diminution de la différence d'adaptation entre les différentes régions de l'image.

À titre d'exemple, un modèle de conversion d'un système composé d'une caméra et d'un afficheur est décrit. Ce modèle permet de reproduire le plus fidèlement possible la radiance spectrale d'une scène, acquise par la caméra, et affichée par l'afficheur. La figure 15 représente un schéma de conversion entre l'espace de radiance de la scène, l'espace de gain de la caméra ($h_R$, $h_G$, $h_B$), et l'espace de gain de l'afficheur ($g_R$, $g_G$, $g_B$). Une radiance spectrale m est acquise par une caméra de sensibilités spectrales $F_1$, $F_2$, $F_3$ qui sont également des vecteurs dans l'espace des lumières RGB. L'information acquise par la caméra peut être représentée comme un gain d'une fonction spectrale d'origine $f_0$ et de gain K'.

Soit F = $[F_1 F_2 F_3]$ une matrice de taille $n_\lambda \times 3$, qui contient les fonctions de sensibilité spectrale de la caméra. Ces fonctions sont composées de la fonction spectrale du chemin optique de la caméra, de la transmission spectrale optique des filtres de couleurs, de la conversion photoélectron par le système électronique. Le chemin optique de la caméra peut être composé de lentilles, microlentilles, filtre biréfringent, filtre de coupure infrarouge.

Les fonctions de sensibilité spectrale de la caméra forment des primaires d'analyse de la radiance spectrale de la scène et on peut reporter le gain de ces primaires dans un espace de gain. On suppose que la caméra est réglée de telle manière que le minimum des radiances de la scène corresponde au gain zéro et que le maximum des radiances de la scène corresponde au gain un. Ce réglage peut être assuré par une modification du niveau de noir $f_0$ et du temps d'intégration *K"* de la caméra. Le modèle de la caméra peut être écrit comme une homographie entre les coordonnées homogènes de la radiance et les coordonnées homogènes du gain.

Soit *zo* = $[z(\lambda) 1]^T$ la coordonnée homogène d'une radiance spectrale de la scène $z(\lambda)$. Les gains *go* = $[g_{F1}, g_{F2}, g_{F3}, s_]^T$ peuvent-être calculés comme suit :

$$go = H_{cam}zo \text{ avec } H_{cam} = \begin{bmatrix} F & | & -f_0 \\ 0\,0\,0 & | & K \end{bmatrix},$$

$$H_{cam}^{-1} = \begin{bmatrix} (F^TF)^{-1}F^T & | & (F^TF)^{-1}F^Tf_0 \\ 0..0 & | & 1/K \end{bmatrix}, \qquad (1063)$$

$$g = [g_{F1}, g_{F2}, g_{F3}] = [g_{F1}, g_{F2}, g_{F3}, 1] = go/s$$

De la même manière, on peut définir un modèle de l'afficheur comme une homographie $H_{dis}$ à partir de l'équation (1003) :

$$H_{dis} = \begin{bmatrix} M & | & m_0 \\ 0\,0\,0 & | & 1 \end{bmatrix}, H_{dis}^{-1} = \begin{bmatrix} (M^TM)^{-1}M^T & | & -(M^TM)^{-1}M^Tm_0 \\ 0..0 & | & 1 \end{bmatrix} (1064)$$

L'homographie de conversion $H_{conv}$ entre les gains de la caméra et les gains de l'afficheur est donnée par :

$$H_{conv} = H_{cam}^{-1}H_{dis}, \text{ et } H_{conv}^{-1} = H_{dis}^{-1}H_{cam} \qquad (1065)$$

En disposant d'un système de conversion entre les données numériques d'une caméra et celles d'un afficheur, il est possible de convertir n'importe quelle donnée d'un espace vers un autre, qu'il soit de type couleur, ABC ou RGB camera ou RGB afficheur, ou encore de type spectral comme une radiance spectrale dans la base des longueurs d'ondes monochromatiques.

Le modèle de l'observateur est considéré comme une sensibilité spectrale, dans un espace hyperbolique. C'est-à-dire que l'espace de l'observateur est un espace affine convexe de dimensions trois muni d'une métrique hyperbolique $\mathbb{H}^3$ que l'on peut plonger dans un espace Euclidien de dimension quatre : $\mathbb{R}^4$.

À chaque observateur correspond un changement de variable entre l'espace de mesure ABC et l'espace hyperbolique de l'observateur $y = [y_1, y_2, y_3]$, ce qui explique les variations de perception entre les individus.

Définissons un espace $y$ à l'aide de l'espace ABC dans lequel les mesures de l'observateur sont réalisées. Le changement de variable adéquat pour plonger la surface de luminance constante dans l'espace hyperbolique $\mathbb{H}^3$ est à déterminer par la suite.

L'espace hyperbolique $\mathbb{H}^3$ dispose d'une métrique qui peut être transformée en métrique Euclidienne en considérant une dimension supplémentaire, $\mathbb{R}^4$. Le modèle de l'hyperboloïde donne les projections $\varphi$ et sa projection inverse comme transformation de l'espace $\mathbb{H}^3$ en $\mathbb{R}^4$.

Le modèle général de transformation entre l'afficheur et l'observateur est représenté sur la figure 16.

La figure 16 représente l'espace de l'observateur 30 face à l'espace des lumières produites par l'afficheur 31. À partir de l'espace de l'afficheur 31, on produit l'espace ABC par orthogonalisation. Dans l'espace ABC, on mesure les surfaces de luminance constantes pour l'observateur, ce qui permet de déterminer le changement de variable $f$ de l'espace ABC vers l'espace $\mathbb{H}^3$. Ensuite, la métrique est imposée par $\mathbb{R}^4$, et l'on projette indifféremment $y$ sur $z$ ou $z$ sur $y$ à travers la projection $\varphi$ et son inverse.

La transformation entre $\mathbb{R}^4$ et $\mathbb{H}^3$ permet d'expliquer la formation d'une surface à luminance constante dans l'espace hyperbolique $\mathbb{H}^3$. Par exemple, une déviation dans le sens de luminance dans l'espace ABC, correspond à une certaine déviation dans l'espace hyperbolique $\mathbb{H}^3$ qui sera déterminé par un déplacement uniforme sur les coordonnées $z_1$, $z_2$ et $z_3$ de l'espace $\mathbb{R}^4$. On peut alors écrire :

$$dx = g(dz) \text{ avec } dz = \begin{bmatrix} d \\ d \\ d \\ \sqrt{(z_1 + d)^2 + (z_2 + d)^2 + (z_3 + d)^2 + 1} \end{bmatrix} \quad (1066)$$

et $g(dz) = F\mathfrak{I}dz$ où $F = \left[\frac{\partial f_j(x_i)}{\partial x_i}\right]$, $\mathfrak{I} = \left[\frac{\partial \varphi(y_i)}{\partial y_i}\right]$ sont les Jacobiennes des transformations $f$ et $\varphi$. $dx$ décrit alors un sous-espace vectoriel que l'on peut apparenter aux mesures de la surface de luminance constante dans l'espace ABC.

Les différents modes de réalisation de la présente invention comprennent diverses étapes. Ces étapes peuvent être mises en œuvre par des instructions d'une machine exécutable au moyen d'un microprocesseur par exemple.

Alternativement, ces étapes peuvent être réalisées par des circuits intégrés spécifiques comprenant une logique câblée pour exécuter les étapes, ou par toute combinaison de composants programmables et de composants personnalisés.

La présente invention peut également être fournie sous forme d'un produit programme d'ordinateur qui peut comprendre un support mémoire informatique non-transitoire contenant des instructions exécutables sur une machine informatique, ces instructions pouvant être utilisées pour programmer un ordinateur (ou tout autre dispositif électronique) pour exécuter les procédés.

La présente invention présente différents avantages selon ses domaines d'application :

- l'invention permet de définir des règles de calcul pour évaluer la qualité des images et des modèles d'apparence selon une perception humaine de ces derniers ;
- avantageusement, l'invention permet une amélioration de la qualité visuelle des interfaces homme-machine et une adaptabilité à plusieurs observateurs différents ;
- il est également possible d'appliquer avantageusement l'invention à des systèmes de réalité artificielle ou augmentée afin de favoriser l'imprégnation de l'observateur face à l'afficheur en utilisant un modèle de vision correspondant à l'observateur.

Les applications industrielles de l'invention sont extrêmement vastes. En considérant, comme il est commun, un modèle moyen d'observateur issu d'une moyenne d'observateurs d'une région donnée du monde par exemple, il est possible d'envisager des applications dans le domaine de la prédiction d'une apparence colorée dans le domaine du textile ou de la peinture.

Il est aussi possible de trouver une application dans le domaine de l'optimisation des phosphores ou des filtres colorés des systèmes d'afficheurs multimédia.

Une autre application peut être dans le domaine de l'optimisation de d'une boucle d'acquisition et restitution de l'imagerie numérique et analogique couleur comme la photographie sur films ou la photographie numérique.

Enfin il est possible d'appliquer l'invention à la création d'avatars extrahumains ayant des propriétés de perception dans des domaines de longueur d'onde hors du domaine électromagnétique visible par un être humain.

**Revendications**

1. Procédé, mis en oeuvre par ordinateur (7), de correction d'une image à afficher sur un dispositif d'affichage (6) connecté audit ordinateur (7), **caractérisé en ce qu'**il comprend au moins les étapes suivantes :

   · une première étape de mesures de radiances spectrales émises par le dispositif d'affichage (6) et capté par un dispositif de mesures de radiance (9);
   · une deuxième étape de construction d'un modèle affine des lumières produites par le dispositif d'affichage (6) à partir des mesures de radiances spectrales;

   ladite deuxième étape comprenant en outre une construction d'un espace de couleur orthogonal euclidien du dispositif d'affichage (6) à partir du modèle affine;

   · une troisième étape de présentation à l'utilisateur d'un stimulus sur le dispositif d'affichage défini dans l'espace de couleur orthogonal euclidien du dispositif d'affichage (6) et de détermination d'un champ de vecteurs de luminance correspondant à la luminance perçue par l'observateur (8) placé devant le dispositif d'affichage (6) et soumis audit stimulus ;
   · une quatrième étape de construction d'un espace hyperbolique z représentant un espace de vision en couleurs propre à l'observateur (8) placé devant le dispositif d'affichage (6) comprenant la détermination, à partir du champ de vecteurs de luminance déterminé, d'une fonction de conversion qui exprime chaque point x dans l'espace de couleur orthogonal euclidien du dispositif d'affichage en des points z dans l'espace hyperbolique associé à l'utilisateur et comprenant la modification de paramètres de la fonction de conversion pour adapter l'image à l'observateur de telle sorte à réaliser une adaptation de l'image présentée par le dispositif d'affichage (6) à un niveau de luminance constant pour l'observateur (8), placé devant le dispositif d'affichage (6) ou à réaliser une adaptation de l'image présentée par le dispositif d'affichage (6) à un niveau de luminance ayant une variance réduite pour diminuer l'adaptation de l'observateur (8) à la différence de luminance entre les différentes régions de l'image ;
   · une cinquième étape de correction d'une image à afficher par le dispositif d'affichage en utilisant la fonction de conversion modifiée telle que déterminée à la quatrième étape.

2. Procédé selon la revendication 1, **caractérisé en ce que** les mesures de radiance spectrales étant réalisées pour plusieurs valeurs numériques DV représentant des consignes données au dispositif d'affichage (6) par une carte graphique présente dans l'ordinateur (7), lesdites consignes permettant d'afficher une image sur chaque canal de couleur du dispositif d'affichage (6).

3. Procédé selon la revendication 2, **caractérisé en ce que** la deuxième étape de construction d'un modèle affine comprend :

   · une étape de calcul de fonctions prototypes du dispositif d'affichage (6) pour chaque canal de couleur en fonction des radiances spectrales mesurées;
   · une étape de calcul de gains du dispositif d'affichage (6) pour chaque canal de couleur en fonction des radiances spectrales mesurées;
   · une étape d'interpolation des gains pour chaque canal de couleur du dispositif d'affichage (6) entre les valeurs des radiances spectrales mesurées;
   · une étape de détermination d'une fonction non-linéaire vectorielle de l'espace des valeurs numériques DV vers l'espace des gains du dispositif d'affichage (6).

**4.** Procédé selon la revendication 3, **caractérisé en ce que** le calcul des fonctions prototype est réalisé par une méthode parmi :

· une utilisation des valeurs maximales des mesures de radiances sur chaque canal de couleur;
· une décomposition de rang un en valeurs et vecteurs singuliers d'une matrice composée des valeurs des mesures de radiance spectrale pour chaque canal de couleur.

**5.** Procédé selon l'une quelconque des revendications précédentes, **caractérisé en ce que** l'étape de transformation de l'espace de couleur orthogonal euclidien en un espace affine est réalisée par une méthode parmi :

· une première méthode dite par décorrélation;
· une deuxième méthode par projection spectrale canonique;
· une troisième méthode dite de Gram-Schmidt;
· une quatrième méthode par décomposition en valeurs singulières.

**6.** Procédé selon l'une quelconque des revendications précédentes, **caractérisé en ce que** la première étape de mesure est mise en oeuvre par un spectrophotomètre (9).

**7.** Dispositif de mesure d'un espace de couleurs propre à un observateur (8) et de correction d'images numériques en fonction de l'espace de couleurs propre à l'observateur (8), **caractérisé en ce qu'**il comprend :

· un dispositif d'affichage (6) d'une image couleur;
· un dispositif de mesure d'une radiance spectrale émise par le dispositif d'affichage (6);
· un dispositif de calcul comprenant au moins : un processeur de calculs, un dispositif d'enregistrement et de stockage de données, une interface avec le dispositif de mesure et une interface avec le dispositif d'affichage (6), une interface avec l'observateur (8); le dispositif de calcul étant configuré pour mettre en oeuvre le procédé selon l'une quelconque des revendications 1 à 6.

**8.** Produit programme d'ordinateur comprenant des instructions qui, lorsque le programme est exécuté par le dispositif de la revendication 7 conduisent celui-ci à mettre en oeuvre les étapes du procédé selon l'une quelconque des revendications 1 à 6.

**9.** Support d'enregistrement lisible par ordinateur comprenant les instructions du produit programme d'ordinateur selon la revendication 8.

**Patentansprüche**

**1.** Verfahren, das durch einen Computer (7) implementiert wird, zum Korrigieren eines Bildes, das auf einer Anzeigevorrichtung (6) angezeigt werden soll, die mit dem Computer (7) verbunden ist, **dadurch gekennzeichnet, dass** es mindestens die folgenden Schritte umfasst:

• einen ersten Schritt zum Messen von spektralen Strahldichten, die durch die Anzeigevorrichtung (6) emittiert und durch eine Strahldichtemessvorrichtung (9) erfasst werden;
• einen zweiten Schritt zum Erstellen eines affinen Modells von Lichtern, die durch die Anzeigevorrichtung (6) erzeugt werden, aus den Messungen der spektralen Strahldichten;
der zweite Schritt umfassend ferner ein Erstellen eines euklidischen orthogonalen Farbraums der Anzeigevorrichtung (6) aus dem affinen Modell;
• einen dritten Schritt zum Darstellen für den Benutzer eines Stimulus auf der Anzeigevorrichtung, der in dem euklidischen orthogonalen Farbraum der Anzeigevorrichtung (6) definiert ist, und zum Bestimmen eines Luminanzvektorfelds, das der Luminanz entspricht, die durch den Beobachter (8) wahrgenommen wird, der vor der Anzeigevorrichtung (6) platziert ist und dem Stimulus ausgesetzt ist;
• einen vierten Schritt zum Erstellen eines hyperbolischen Raums z, der für einen Farbsehraum steht, der für den Beobachter (8) spezifisch ist, der vor der Anzeigevorrichtung (6) platziert ist, umfassend das Bestimmen, aus dem bestimmten Luminanzvektorfeld, einer Konvertierungsfunktion, die jeden Punkt x in dem euklidischen orthogonalen Farbraum der Anzeigevorrichtung in Punkte z in dem hyperbolischen Raum ausdrückt, der dem Benutzer zugeordnet ist, und umfassend das Ändern von Parametern der Konvertierungsfunktion, zum Anpassen des Bildes an den Beobachter, um eine Anpassung des Bildes, das durch die Anzeigevorrichtung (6) dargestellt wird, an eine konstante Luminanzstufe für den Beobachter (8) durchzuführen, der vor der Anzeigevorrichtung (6) platziert ist, oder um eine Anpassung des Bildes, das durch die Anzeigevorrichtung (6) dargestellt wird, an eine Luminanzstufe durchzuführen, die eine reduzierte Varianz zum Reduzieren der Anpassung des Beobachters (8) an die Luminanzunterschiede zwischen den unterschiedlichen Bereichen des Bildes aufweist;
• einen fünften Schritt zum Korrigieren eines Bildes, das durch die Anzeigevorrichtung angezeigt werden soll, unter Verwendung der geänderten Konvertierungsfunktion wie sie in dem vierten Schritt bestimmt wird.

2. Verfahren nach Anspruch 1, **dadurch gekennzeichnet, dass** die spektralen Strahldichtemessungen für mehrere digitale Werte DV durchgeführt werden, die für Vorgaben stehen, die durch eine Grafikkarte, die in dem Computer (7) vorhanden ist, an die Anzeigevorrichtung (6) gegeben werden, wobei die Vorgaben es ermöglichen, ein Bild auf jedem Farbkanal der Anzeigevorrichtung (6) anzuzeigen.

3. Verfahren nach Anspruch 2, **dadurch gekennzeichnet, dass** der zweite Schritt zum Erstellen eines affinen Modells umfasst:

   • einen Schritt zum Berechnen von Prototypfunktionen der Anzeigevorrichtung (6) für jeden Farbkanal in Abhängigkeit von den gemessenen spektralen Strahldichten;
   • einen Schritt zum Berechnen von Verstärkungen der Anzeigevorrichtung (6) für jeden Farbkanal in Abhängigkeit von den gemessenen spektralen Strahldichten;
   • einen Schritt zum Interpolieren der Verstärkungen für jeden Farbkanal der Anzeigevorrichtung (6) zwischen den Werten der gemessenen spektralen Strahldichten;
   • einen Schritt zum Bestimmen einer nichtlinearen Vektorfunktion aus dem Raum der digitalen Werte DV in den Raum der Verstärkungen der Anzeigevorrichtung (6).

4. Verfahren nach Anspruch 3, **dadurch gekennzeichnet, dass** das Berechnen der Prototypfunktionen nach einem der folgenden Methoden durchgeführt wird:

   • Verwenden der Maximalwerte der Strahldichtemessungen auf jedem Farbkanal;
   • Rang-Eins-Zerlegen in singuläre Werte und Vektoren einer Matrix, die aus den Werten der spektralen Strahldichtemessungen für jeden Farbkanal besteht.

5. Verfahren nach einem der vorstehenden Ansprüche,
   **dadurch gekennzeichnet, dass** der Schritt zum Umwandeln des euklidischen orthogonalen Farbraums in einen affinen Raum durch eine der folgenden Methoden durchgeführt wird:

   • eine erste Methode genannt durch Dekorrelation;
   • eine zweite Methode durch kanonische Spektralprojektion;
   • eine dritte Methode genannt Gram-Schmidt;
   • eine vierte Methode durch Zerlegung in singuläre Werte.

6. Verfahren nach einem der vorstehenden Ansprüche,
   **dadurch gekennzeichnet, dass** der erste Messschritt durch ein Spektralphotometer (9) implementiert wird.

7. Vorrichtung zum Messen eines Farbraums, der für einen Beobachter (8) spezifisch ist, und zum Korrigieren digitaler Bilder in Abhängigkeit von dem Farbraum, der für den Beobachter (8) spezifisch ist,
   **dadurch gekennzeichnet, dass** es umfasst:

   • eine Anzeigevorrichtung (6) für ein Farbbild;
   • eine Vorrichtung zum Messen einer spektralen Strahldichte die durch die Anzeigevorrichtung (6) emittiert wird;
   • eine Berechnungsvorrichtung, umfassend mindestens: einen Berechnungsprozessor, eine Datenaufzeichnungs- und -speichervorrichtung, eine Schnittstelle mit der Messvorrichtung und eine Schnittstelle mit der Anzeigevorrichtung (6), eine Schnittstelle mit dem Beobachter (8); wobei die Berechnungsvorrichtung zum Implementieren des Verfahrens nach einem der Ansprüche 1 bis 6 konfiguriert ist.

8. Computerprogrammprodukt, umfassend Anweisungen, die, wenn das Programm durch einen Computer nach Anspruch 7 ausgeführt wird, diesen veranlassen, die Schritte des Verfahrens nach einem der Ansprüche 1 bis 6 zu implementieren.

9. Computerlesbares Aufzeichnungsmedium, umfassend die Anweisungen des Computerprogrammprodukts nach Anspruch 8.

**Claims**

1. Method, implemented by a computer (7), for correcting an image to be displayed on a display device (6) connected to said computer (7), **characterized in that** it comprises at least the following steps:

   • a first step of measuring spectral radiances emitted by the display device (6) and captured by a radiance measurement device (9);
   • a second step of constructing an affine model of the lights produced by the display device (6) from the spectral radiance measurements;

   said second step further comprising constructing an orthogonal Euclidean color space of the display device (6) from the affine model;

   • a third step of presenting the user with a stimulus on the display device defined in the orthogonal Euclidean color space of the display device (6) and determining a field of luminance vectors corresponding to the luminance perceived by the observer (8) placed in front of the display device (6) and subjected to said stimulus;
   • a fourth step of constructing a hyperbolic space z representing a color vision space specific to the observer (8) placed in front of the display device (6) comprising determining, from the determined field of luminance vectors, a conversion function which expresses each point x in the orthogonal Euclidean color space of the display device into points z in the hyperbolic space associated with the user and comprising modifying parameters of the conversion function to adapt the image to the observer so as to carry out an adaptation of the image presented by the display device (6) at a constant luminance level for the observer (8) placed in front of the display device (6) or to carry out an adaptation of the image presented by the display device (6) at a luminance level having a reduced variance in order to reduce the adaptation of the observer (8) to the luminance difference between the different regions of the image;
   • a fifth step of correcting an image to be displayed by the display device using the modified conversion function as determined in the fourth step.

2. Method according to claim 1, **characterized in that** the spectral radiance measurements are carried out for a plurality of digital values DV representing instructions provided to the display device (6) by a graphics card present in the computer (7), said instructions enabling an image to be displayed on each color channel of the display device (6).

3. Method according to claim 2, **characterized in that** the second step of constructing an affine model comprises:

   • a step of calculating prototype functions of the display device (6) for each color channel as a function of the measured spectral radiances;
   • a step of calculating gains of the display device (6) for each color channel as a function of the measured spectral radiances;
   • a step of interpolating the gains for each color channel of the display device (6) between the measured spectral radiance values;
   • a step of determining a non-linear vector function from the space of the digital values DV to the space of the gains of the display device (6).

4. Method according to claim 3, **characterized in that** the calculation of the prototype functions is carried out using one of the following methods:

   • using maximum radiance measurement values on each color channel;
   • a rank-one decomposition into singular values and vectors of a matrix composed of the values of the spectral radiance measurements for each color channel.

5. Method according to any one of the preceding claims, **characterized in that** the step of transforming the orthogonal Euclidean color space into an affine space is carried out using one of the following methods:

   • a first method, referred to as using decorrelation;

• a second method using canonical spectral projection;
• a third method, referred to as the Gram-Schmidt method;
• a fourth method using singular value decomposition.

6. Method according to any one of the preceding claims, **characterized in that** the first measurement step is implemented by a spectrophotometer (9).

7. Device for measuring a color space specific to an observer (8) and for correcting digital images as a function of the color space specific to the observer (8), **characterized in that** it comprises:

• a color image display device (6);
• a device for measuring a spectral radiance emitted by the display device (6);
• a calculation device comprising at least: a calculation processor, a data recording and storage device, an interface with the measurement device and an interface with the display device (6), an interface with the observer (8); the calculation device being configured to implement the method according to any one of claims 1 to 6.

8. Computer program product comprising instructions which, when the program is executed by the device of claim 7, cause the device to implement the steps of the method according to any one of claims 1 to 6.

9. Computer-readable recording medium comprising instructions for the computer program product according to claim 8.

1

2

Construction d'un espace de couleur
Euclidien associé à un afficheur particulier

3

Mesure d'un champ de vecteurs de luminance
propre à un individu dans l'espace Euclidien

4

Construction d'un espace hyperbolique de
perception de la couleur par un individu face à
l'afficheur

5

Compensation des images numériques pour
l'individu observant l'afficheur

FIG 1

8

6

7

D    v

h    h    h

v

v

9

FIG 2

FIG 3

FIG 4

FIG 5

FIG 6

FIG 7a

FIG 7b

FIG 7c

FIG 7d

FIG 15

FIG 8a

FIG 8b

FIG 8c

FIG 8d

FIG 9a

FIG 9b

FIG 10

FIG 11a

FIG 11b

FIG 12a

FIG 12b

FIG 13a

FIG 13b

FIG 13c

FIG 13d

FIG 16

FIG 14

## RÉFÉRENCES CITÉES DANS LA DESCRIPTION

**Documents brevets cités dans la description**

- US 2013154903 A1

**Littérature non-brevet citée dans la description**

- **SILES, W.S.** ; **BRUCH J. M**. *NPL colour-matching investigation : final report*
- **MICHAEL A WEBSTER et al.** *Motion Minima for Different Directions in Color Space INTRODUCTION*
- **CROPPER et al.** *The detection of motion in chromatic stimuli: first-order and second-order spatial structure*
- **J. COHEN** ; **KAPPAUF, DANS W. E.** Color mixture and fundamental metamers: Theory, algebra, geometry, application. *The American journal of psychology*, 1985, 171-259
- **ANSTIS, S. M.** ; **CAVANAGH**. A minimum motion technique for judging equiluminance. *Colour vision: Physiology and psychophysics*, 155-166